# EUROPÄISCHE PATENTSCHRIFT

(11) **EP 2 238 329 B1**
(45) Veröffentlichungstag und Bekanntmachung des Hinweises auf die Patenterteilung: **13.07.2011**
(21) Anmeldenummer: 08871306.0
(22) Anmeldetag: 14.11.2008
(51) Int. Cl.: F02D 19/08, F02D 41/00

(54) **VERFAHREN UND VORRICHTUNG ZUR BESTIMMUNG DER ZUSAMMENSETZUNG EINES KRAFTSTOFFGEMISCHS**
METHOD AND DEVICE FOR DETERMINING THE COMPOSITION OF A FUEL MIXTURE
PROCÉDÉ ET DISPOSITIF POUR DÉTERMINER LA COMPOSITION D'UN MÉLANGE DE CARBURANTS

(30) Priorität: 25.01.2008 DE 102008006029; 13.11.2008 DE 102008043697
(43) Veröffentlichungstag der Anmeldung: 13.10.2010
(73) Patentinhaber: Robert Bosch GmbH, 70442 Stuttgart (DE)
(72) Erfinder: SCHNEIDER, Jens, 71229 Leonberg (DE); UHL, Stephan, 71706 Markgroeningen (DE); WINKLER, Klaus, 71277 Rutesheim (DE); DIEHL, Lothar, 70839 Gerlingen (DE); STAVRIANOS, Dimitrios, 70195 Stuttgart (DE); WENDT, Juergen, 70372 Stuttgart (DE)
(86) Internationale Anmeldenummer: PCT/EP2008/065531
(87) Internationale Veröffentlichungsnummer: WO 2009/092470

(56) Entgegenhaltungen:
- DE-A1-102007 020 959
- FR-A- 2 840 028
- US-A1- 2004 182 378
- US-A1- 2008 115 759

## Beschreibung

### Stand der Technik

Die Erfindung betrifft ein Verfahren zur Bestimmung der Zusammensetzung eines Kraftstoffgemischs aus einem ersten und zumindest einem zweiten Kraftstoff zum Betrieb einer Brennkraftmaschine, wobei die Brennkraftmaschine eine Kraftstoff-Dosiereinrichtung und zumindest eine Abgassonde in einem Abgaskanal aufweist.

Brennkraftmaschinen auf der Basis von Otto-Motoren werden allgemein mit Kraftstoff aus Kohlenwasserstoffen aus fossilen Brennstoffen auf Basis von raffiniertem Erdöl betrieben. Zu diesem Kraftstoff wird vermehrt aus nachwachsenden Rohstoffen (Pflanzen) erzeugter Alkohol, beispielsweise Ethanol oder Methanol, in unterschiedlichen Mischungsverhältnissen beigemengt. In den USA und Europa wird oft eine Mischung aus 75-85% Ethanol und 15-25% Benzin unter dem Markennamen E85 eingesetzt. Die Brennkraftmaschinen sind so ausgelegt, dass sie sowohl mit reinem Benzin als auch mit Mischungen bis hin zu E85 betrieben werden können; dies wird mit "Flex-Fuel-Betrieb" bezeichnet. Für einen sparsamen Betrieb mit einem geringen Schadstoffausstoß bei gleichzeitig hoher Motorleistung müssen die Betriebsparameter im Flex-Fuel-Betrieb an die jeweilig vorliegende Kraftstoff Mischung angepasst werden. Beispielhaft liegt ein stöchiometrisches Luft-Kraftstoff-Verhältnis bei 14,7 Gewichtsanteilen Luft pro Anteil Benzin vor, bei Verwendung von Ethanol muss jedoch ein Luftanteil von 9 Gewichtsanteilen eingestellt werden.

Über das Zusammenspiel von Sensoren werden die momentane Kraftstoffzusammensetzung vor dem Einspritzzeitpunkt und die momentane Abgaszusammensetzung, also der Sauerstoff-Partialdruck im Abgas, bestimmt und an die Steuerelektronik der Brennkraftmaschine weiter geleitet. Auf Basis dieser Sensordaten wird die Verbrennung der Brennkraftmaschine, insbesondere über die Einstellung des günstigsten Luft-/Kraftstoffverhältnisses, optimiert.

Zur Bestimmung der Zusammensetzung des Kraftstoffgemischs werden unterschiedliche Kraftstoffartensensoren, auch als "fuel composition sensors" bezeichnet, eingesetzt. Kraftstoffartensensoren nutzen die unterschiedlichen Eigenschaften von Alkohol und Benzin zur Bestimmung der Kraftstoffzusammensetzung. So ist beispielsweise Ethanol ein protisches Lösemittel, welches Wasserstoffionen enthält und eine große, jedoch vom Wassergehalt abhängige, Dielektrizitätskonstante aufweist. Benzin hingegen ist ein aprotisches Lösemittel mit einer kleinen Dielektrizitätskonstanten. Darauf basierend gibt es Kraftstoffartensensoren, welche die Kraftstoffzusammensetzung anhand der dielektrischen Eigenschaften des Kraftstoffgemischs bestimmen. Andere Kraftstoffartensensoren nutzen die unterschiedliche elektrische Leitfähigkeit oder die unterschiedlichen optischen Eigenschaften der Kraftstoffe wie beispielhaft die unterschiedlichen Brechungsindices.

In der DE 41 12 574 ist ein Kraftstoffzuführungssystem für einen Verbrennungsmotor beschrieben, in dem der Betriebszustand des Verbrennungsmotors erfasst und die Menge des zuzuführenden Kraftstoffs entsprechend dem Ergebnis dieser Erfassung gesteuert wird. Dabei ist es vorgesehen, dass das Kraftstoffzuführungssystem ein Kraftstoffart-Erfassungsmittel zur Erfassung der Kraftstoffart und ein Rechenmittel zur Berechnung eines der Kraftstoffart entsprechenden theoretischen Luft-Kraftstoff Verhälmisses in Übereinstimmung mit dem Erfassungsergebnis des Kraftstoffart-Erfassungsmittels umfasst und die Menge des zuzuführenden Kraftstoffs unter Verwendung des vom Rechenmittel erhaltenen theoretischen Luft-Kraftstoff-Verhältnisses als Ziel-Luft-Kraftstoff-Verhältnis gesteuert wird. Dabei kann es vorgesehen sein, dass das Kraftstoffart-Erfassungsmittel die Kraftstoffart durch die Messung wenigstens entweder des Brechungsindexes, der Dielektrizitätskonstanten oder der Molwärme des Kraftstoffs im flüssigen Zustand erfasst.

Für die Durchführung des Verfahrens müssen jedoch entsprechende Sensoren vorgesehen werden, welche teuer und fehleranfällig sind.

Es ist Aufgabe der Erfindung, ein Verfahren und eine Vorrichtung bereitzustellen, welche eine zuverlässige und kostengünstige Erkennung der Zusammensetzung eines Kraftstoffgemischs aus zumindest zwei Kraftstoffen ermöglichen.

### Vorteile der Erfindung

Die das Verfahren betreffende Aufgabe der Erfindung wird dadurch gelöst, dass der Abgassonde zumindest zeitweise das Kraftstoffgemisch zumindest teilweise unverbrannt zugeführt wird und dass aus einem Ausgangssignal der Abgassonde die Zusammensetzung des Kraftstoffgemischs bestimmt wird. Unverbrannte Kraftstoffe werden an der Außenelektrode oder der Messelektrode der Abgassonde oxidiert, wodurch das Ausgangssignal der Abgassonde beeinflusst wird. Dabei unterscheiden sich unterschiedliche Kraftstoffe, beispielsweise Alkohol und Benzin, in ihrem Oxidationsverhalten und in ihrer Oxidationskinetik und damit in ihrer Beeinflussung des Ausgangssignals der Abgassonde. Anhand des Ausgangssignals der Abgassonde kann daher auf die Zusammensetzung des Kraftstoffgemischs geschlossen werden. Vorteilhaft hierbei ist, dass die Bestimmung der Zusammensetzung des Kraftstoffgemischs mit Hilfe von in modernen Brennkraftmaschinen ohnehin vorgesehenen Abgassonden erfolgen kann und somit keine zusätzlichen Bauteile und Sensoren benötigt werden.

Zur Auswertung des Ausgangssignals der Abgassonde ist es vorteilhaft, wenn die Menge des der Abgassonde zugeführten, unverbrannten Kraftstoffes bekannt ist. Daher kann es vorgesehen sein, dass der Abgassonde eine vordefinierte Menge des Kraftstoffgemischs zugeführt wird.

Der Abgassonde kann ohne zusätzliche Bauelemente und ohne eine Beeinflussung des Betriebs der Brennkraftmaschine unverbrannter Kraftstoff dadurch zugeführt werden, dass das Kraftstoffgemisch der Brennkraftmaschine mittels der Kraftstoff-Dosiereinrichtung in einem Schubbetrieb zugeführt wird. Insbesondere bei fremd gezündeten Brennkraftmaschinen erfolgt während des Schubbetriebs keine Zündung, so dass der Kraftstoff beziehungsweise das Kraftstoffgemisch den Brennraum unverbrannt passieren kann.

Entsprechend einer alternativen Ausgestaltungsvariante der Erfindung kann es vorgesehen sein, dass die vordefinierte Menge des Kraftstoffgemischs der Brennkraftmaschine mittels der Kraftstoff-Dosiereinrichtung so spät nach einem oberen Totpunkt zugeführt wird, dass das Kraftstoff gemisch zumindest teilweise unverbrannt die Abgassonde erreicht. Die Dosierung des Kraftstoffs in den jeweiligen Brennraum der Brennkraftmaschine erfolgt dann deutlich nach der Zündung der Haupteinspritzung, das Kraftstoffgemisch wird nicht mehr oder nur noch unvollständig verbrannt. Entsprechend einer besonders bevorzugten Ausgestaltungsvariante der Erfindung kann es vorgesehen sein, dass das Kraftstoffgemisch der Brennkraftmaschine mittels der Kraftstoff-Dosiereinrichtung zumindest teilweise während eines Ausstoßtaktes bei geöffnetem Auslassventil zugeführt wird. Das Kraftstoffgemisch kann so den Brennraum unverbrannt passieren und zur Abgassonde gelangen. Vorteilhaft hierbei ist, dass das Kraftstoffgemisch nicht komprimiert wird, was einen größeren Unterschied des Ausgangssignals der Abgassonde bei Beaufschlagung beispielsweise mit Benzin oder mit Äthanol bewirkt.

Die für die Bestimmung der Zusammensetzung des Kraftstoffgemischs benötigte Menge an Kraftstoffgemisch kann dadurch begrenzt werden, dass bei Brennkraftmaschinen mit mehreren Zylindern das unverbrannte Kraftstoffgemisch einem Zylinder oder einer ausgewählten Anzahl an Zylindern zugeführt wird. Den übrigen Zylindern wird während der Bestimmung der Zusammensetzung des Kraftstoffgemischs kein Kraftstoff zugeführt. Dadurch lässt sich auch die Emission an unverbrannten Kohlenwasserstoffen verringern.

Eine möglichst langsame katalytische Oxidation des unverbrannten Kraftstoffs an der Außenelektrode beziehungsweise der Messelektrode der Abgassonde führt zu einer verbesserten Zuverlässigkeit und Messgenauigkeit bei der Bestimmung der Zusammensetzung des Kraftstoffgemischs anhand des Ausgangssignals der Abgassonde. Daher kann es vorgesehen sein, dass während der Bestimmung der Zusammensetzung des Kraftstoffgemischs die Temperatur der Abgassonde herabgesetzt wird. Eine verringerte Temperatur der Abgassonde und somit der Außenelektrode beziehungsweise der Messelektrode führt zu einer verringerten Oxidationsgeschwindigkeit einer der Kraftstoffkomponenten.

Die Genauigkeit der Bestimmung der Zusammensetzung des Kraftstoffgemischs mit Hilfe von Abgassensoren ist von unterschiedlichen Einflussgrößen abhängig, unter anderem von dem verwendeten Abgassensor. Bereits eine Genauigkeit von besser als 30% kann als ergänzendes Indiz zu den Software-Algorithmen, mit welchen bereits heute die Zusammensetzung von Kraftstoffgemischen nach unterschiedlichen Verfahren bestimmt wird, genutzt werden. Mit einer Genauigkeit besser 10% kann ein Ethanol-Sensor geringerer Qualität vollständig ersetzt werden, mit einer Genauigkeit besser 5% ein qualitativ hochwertiger Ethanolsensor nach dem heutigen Stand der Technik. Daher kann es vorgesehen sein, dass die Bestimmung der Zusammensetzung des Kraftstoffgemischs ausschließlich aus dem Signal der Abgassonde erfolgt oder in einer Kombination mit anderen Verfahren zur Bestimmung der Zusammensetzung des Kraftstoffgemischs durchgeführt wird.

Entsprechend einer besonders bevorzugten Ausgestaltungsvariante der Erfindung kann es vorgesehen sein, dass als Abgassonde eine Breitband-Lambdasonde verwendet wird. Breitband-Lambdasonden werden heute weit verbreitet im Abgaskanal von Brennkraftmaschinen eingesetzt. Dabei sind für die Bestimmung der Zusammensetzung von Kraftstoffgemischen motornah vor einem ersten Katalysator eingebaute Breitband-Lambdasonden besonders geeignet.

Ein möglichst großer Unterschied der Oxidationskinetik von unterschiedlichen Kraftstoffkomponenten, beispielsweise von Benzin und Alkohol, an der Außenelektrode beziehungsweise der Messelektrode der Abgassonde mit dem bereits genannten positiven Einfluss auf die Zuverlässigkeit und Messgenauigkeit des Verfahrens lässt sich bei Breitband-Lambdasonden dadurch realisieren, dass die Temperatur der Abgassonde während der Bestimmung der Zusammensetzung des Kraftstoffgemischs auf einen Bereich von 550°C bis 700°C oder auf einen Bereich von 400°C bis 550°C eingestellt wird.

Die Bestimmung der Zusammensetzung des Kraftstoffgemischs kann dadurch erfolgen, dass eine Änderung eines Pumpstroms der Breitband-Lambdasonde gegenüber einem Referenzwert zur Bestimmung der Zusammensetzung des Kraftstoffgemischs verwendet wird. Der Referenzwert des Pumpstroms kann dabei für ein bekanntes Kraftstoffgemisch oder für einen reinen Kraftstoff hinterlegt sein.

Entsprechend einer alternativen Ausgestaltungsvariante der Erfindung kann es vorgesehen sein, dass als Abgassonde eine Lambdasonde mit Sprungcharakteristik verwendet wird. Solche Lambdasonden sind kostengünstig und ebenfalls weit verbreitet. Auf Grund der geringen Kosten für eine solche Lambdasonde kann es auch wirtschaftlich sinnvoll sein, diese nur für die Bestimmung der Zusammensetzung des Kraftstoffgemischs ohne weitere Aufgaben bezüglich der Bestimmung der Abgaszusammensetzung motornah vorzusehen.

Ein möglichst großer Unterschied der Oxidationskinetik von unterschiedlichen Kraftstoffkomponenten, beispielsweise von Benzin und Alkohol, an der Außenelektrode beziehungsweise der Messelektrode lässt sich bei Lambdasonden mit Sprungcharakteristik dadurch realisieren, dass die Temperatur der Abgassonde während der Bestimmung der Zusammensetzung des Kraftstoffgemischs auf einen Bereich von 500°C bis 650°C oder auf einen Bereich von 350°C bis 500°C eingestellt wird.

Eine einfache Auswertung des Ausgangssignals der Lambdasonde mit Sprungcharakteristik wird dadurch möglich, dass eine Verschiebung eines Ausgangssignals der Abgassonde im fetten Bereich zur Bestimmung der Zusammensetzung des Kraftstoffgemischs verwendet wird.

Entsprechend einer weiteren alternativen Variante der Erfindung kann es vorgesehen sein, dass als Abgassonde eine für Kohlenwasserstoffe sensitive Abgassonde verwendet wird. Dabei kann eine Lambdasonde mit zusätzlicher Kohlenwasserstoff Empfindlichkeit oder eine reine Kohlenwasserstoff-Sonde verwendet werden. Im Falle der Lambdasonde mit zusätzlicher Kohlenwasserstoff Empfindlichkeit können sowohl Sprung-Lambdasonden wie auch Breitband-Lambdasonden vorgesehen sein. Solche Lambdasonden mit zusätzlicher Kohtenwasserstoff-Empfindtichkeit sind bekannt, zur Bestimmung des Kohlenwasserstoff-Gehalts im Abgas sind zusätzliche Elektrodensysteme vorgesehen. Die Funktion der Abgasüberwachung wird von der Lambda-Sonde übernommen. Vorteilhaft bei der Verwendung von für Kohlenwasserstoff sensitiven Abgassonden ist die erhöhte Messgenauigkeit dieser Sonden. Dabei bieten kombinierte Systeme aus Lambda-Sonde und Kohlenwasserstoff-Sensor den Vorteil, dass sowohl die Abgasüberwachung als auch die Bestimmung der Zusammensetzung des Kraftstoffgemischs mit einem Bauteil erfolgen kann. Vorteilhaft bei der Verwendung einer reinen Kohlenwasserstoff-Sonde ohne Lambda-Funktionalität ist, dass diese optimal an die Anforderungen zur genauen Bestimmung der Zusammensetzung von Kraftstoffgemischen ausgelegt werden kann, beispielsweise in der Auslegung der Elektroden oder der Sondentemperatur.

Dabei kann die beste Genauigkeit bei der Bestimmung der Zusammensetzung eines Kraftstoffgemischs, beispielsweise eines Alkohol-Benzin-Gemischs, dadurch erreicht werden, dass die Temperatur der für Kohlenwasserstoffe sensitiven Abgassonde während der Bestimmung der Zusammensetzung des Kraftstoffgemischs auf einen Bereich von 400°C bis 650°C eingestellt wird.

Das Verfahrenlässt sich bevorzugt zur Bestimmung der Zusammensetzung eines Benzin/Ethanol-Kraftstoffgemischs und/oder eines Benzin/Methanol-Kraftstoffgemischs und/oder eines Benzin/Ethanol/Methanol-Kraftstoffgemischs verwenden.

### Kurze Beschreibung der Zeichnungen

Die Erfindung wird im Folgenden anhand der in den Figuren dargestellten Ausführungsbeispiele näher erläutert. Es zeigen:
Figur 1 in einer schematischen Darstellung eine Brennkraftmaschine mit einem Ansaugkanal und einem Abgaskanal,
Figur 2 den zeitlichen Verlauf von Einspritzzeiten während Diagnosephasen zur Bestimmung der Zusammensetzung eines Kraftstoffgemischs,
Figur 3 den zeitlichen Verlauf von Ausgangssignalen einer Breitband-Lambdasonde während Diagnosephasen zur Bestimmung der Zusammensetzung eines Kraftstoffgemischs.

### Ausführungsformen der Erfindung

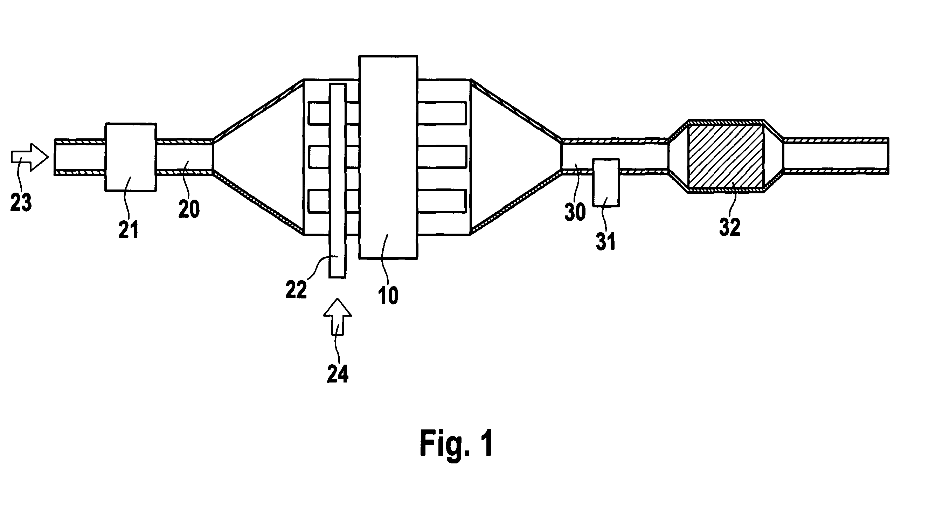

Figur 1 zeigt in einer schematischen Darstellung eine Brennkraftmaschine 10 mit einem Ansaugkanal 20 und einem Abgaskanal 30.

Dem Ansaugkanal 20 ist ein Luftmassenmesser 21 zugeordnet, mit welchem die Masse der der Brennkraftmaschine 10 zugeführten Luft 23 bestimmt wird. Unmittelbar vor der Brennkraftmaschine 10 ist eine Kraftstoff-Dosiereinrichtung 22 vorgesehen. Die Kraftstoff-Dosiereinrichtung 22 ermöglicht es, der Brennkraftmaschine 10 definierte Mengen eines Kraftstoffgemischs 24 zuzuführen.

Im Abgaskanals 30 der Brennkraftmaschine 10 ist in Richtung des Abgasstroms zunächst eine Abgassonde 31 angeordnet. Dabei befindet sich die Abgassonde 31 in unmittelbarer Nähe der Brennkraftmaschine 10 vor einem ersten Katalysator 32.

Die Brennkraftmaschine 10 ist in dem dargestellten Ausführungsbeispiel als Otto-Motor ausgeführt, welcher im Flex-Fuel-Betrieb mit Kraftstoffgemischen 24 aus Benzin und Alkohol betrieben wird. Dabei wird das Kraftstoffgemisch 24 unmittelbar vor den nicht dargestellten Einlassventilen der Brennkraftmaschine 10 in den Ansaugkanal 10 gespritzt und zusammen mit der angesaugten Luft 23 der Brennkraftmaschine 10 zugeführt.

Die motornah angeordnete Abgassonde 31 entspricht in dem Ausführungsbeispiel einer Lambdasonde mit Sprungcharakteristik. Sie dient der Überwachung der Abgaswerte und regelt entsprechend die Luft- und Kraftstoffzufuhr der Brennkraftmaschine 10.

Erfindungsgemäß ist es vorgesehen, dass der Abgassonde 31 zur Bestimmung der Zusammensetzung des Kraftstoffgemischs 24 unverbranntes oder zumindest teilweise unverbranntes Kraftstoffgemisch 24 zugeführt wird. Dies erfolgt in dem dargestellten Ausführungsbeispiel dadurch, dass in Diagnoscphasen während Schubbetriebsphasen der Brennkraftmaschine 10 eine definierte Menge des Kraftstoffgemischs 24 zugeführt wird. Während des Schubbetriebs wird das Luft-Kraftstoff Gemisch nicht gezündet und gelangt so unverbrannt zu der Abgassonde 31.

Aufgrund der unterschiedlichen Oxidationskinetik von Benzin und Alkohol wird das Ausgangssignal der Abgassonde 31 bei Kraftstoffgemischen 24 unterschiedlicher Zusammensetzung unterschiedlich beeinflusst. Bei der hier eingesetzten Lambdasonde mit Sprungcharakteristik führt dies insbesondere zu Unterschieden in der Verschiebung des Fettgas-Signals. So führt Alkohol im Vergleich zu einem gleichen Volumen der Abgassonde 31 zugeführten Benzins zu einer geringeren Verschiebung des Fettgas-Signals, was zur Bestimmung des Alkohol-Anteils in dem Kraftstoffgemisch 24 verwendet werden kann. Der Effekt lässt sich dadurch verstärken, dass die Temperatur der Abgassonde 31 während der Diagnosephase reduziert wird, wodurch die katalytische Oxidation des unverbrannten Kraftstoffgemischs 24 an der Außenelektrode der Abgassonde 31 langsamer erfolgt. Für Lambdasonden mit Sprungcharakteristik sind Temperaturbereiche von 350°C bis 500°C oder von 500°C bis 650°C geeignet. Weiterhin kann es vorgesehen sein, dass die Lambdasonde mit Sprungcharakteristik mit einer Schutzschicht als Grenzstromsonde mit linearisierter Kennlinie betrieben wird.

In einer alternativen Ausführungsform der Erfindung kann die Abgassonde 31 als Breitband-Lambdasonde ausgeführt sein. Die Bestimmung der Kraftstoffzusammensetzung erfolgt auch hier während gesonderter Diagnosephasen, beispielsweise während Schubbetriebsphasen der Brennkraftmaschine 10, anhand von Unterschieden im Pumpstrom bei Verwendung von Kraftstoffgemischen unterschiedlicher Zusammensetzung. Dabei kann die Änderung des Pumpstroms gegenüber einer bekannten Referenz ausgewertet werden. Zur Bestimmung der Kraftstoffzusammensetzung des zugeführten Kraftstoffgemischs 24 sind auch bei Breitband-Lambdasonden niedrigere Temperaturen der Abgassonde 31 vorteilhaft. Dabei sind Temperaturbereiche von 550°C bis 700°C und 400°C bis 550°C geeignet.

Entsprechend einer weiteren alternativen Ausführungsform der Erfindung kann als Abgassonde 31 eine für Kohlenwasserstoffe sensitive Abgassonde 31 verwendet werden. Dabei kann es sich um eine Lambdasonde mit zusätzlichen Sensoren, beispielsweise von Pt/Au-Mischpotential-Elektroden, zur Bestimmung von Kohlenwasserstoffen oder um eine Abgassonde 31 zur Bestimmung von Kohlenwasserstoffen ohne Lambda-Funktionalität handeln. In beiden Fällen wird der Abgassonde 31 unverbranntes oder teilverbranntes Kraftstoffgemisch 24 zugeführt. Die Bestimmung der Zusammensetzung des Kraftstoffgemischs 24 erfolgt anhand der Kohlenwasserstoff-Selektivität der Abgassonde 31, bevorzugt in einem Temperaturbereich von 400°C bis 650°C.

Für alle Ausführungs formen ist es wichtig, dass der Abgassonde 31 unverbranntes oder nur teilweise verbranntes Kraftstoffgemisch 24 zugeführt wird. Dazu ist die Abgassonde 31 bevorzugt nahe der Brennkraftmaschine 10 vor einem ersten Katalysator 32 in dem Abgaskanal 30 vorgesehen. Der Abgassonde 31 kann so, abhängig von der eingesetzten Brennkraftmaschine 10, unverbranntes Kraftstoffgemisch 24 dadurch zugeführt werden, dass eine definierte Menge des Kraftstoffgemischs 24 während der Diagnosephase mittels Direkteinspritzung zudosiert wird oder dass die definierte Menge des Kraftstoffgemischs 24 während einer Schubbetriebsphase der Brennkraftmaschine 10 oder aber so spät nach einem oberen Totpunkt abgesetzt wird, dass dieses unverbrannt oder teilverbrannt an die Abgassonde 31 gelangen kann.

Die zugeführte Menge des Kraftstoffgemischs 24 ist dabei so zu begrenzen, dass durch die Oxidation des Kraftstoffgemischs 24 an dem nachfolgenden Katalysator 32 und der dabei freigesetzten Wärmeenergie keine Beschädigung des Katalysators 32 oder nachfolgend angeordneter Bauteile erfolgt.

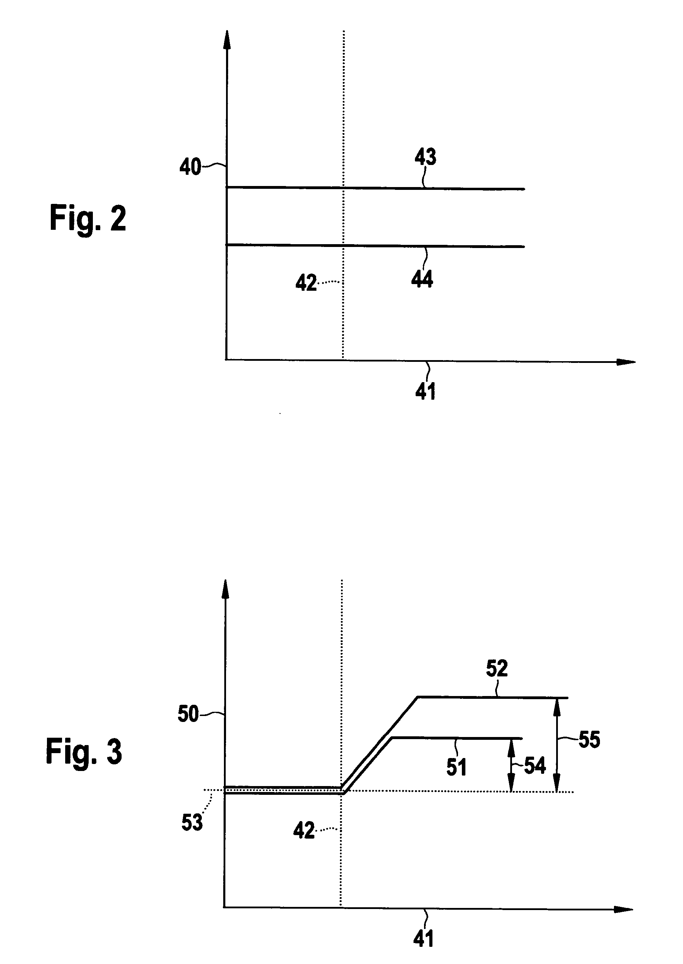

Figur 2 zeigt den zeitlichen Verlauf von Einspritzzeiten 43, 44 während Diagnosephasen zur Bestimmung der Zusammensetzung eines Kraftstoffgemischs 24. Dazu ist die Einspritzzeit ti 40 gegenüber einer Zeitachse 41 aufgetragen. Eine Kurve Einspritzzeit Ethanol 43 zeigt die Einspritzzeit für Ethanol und eine Kurve Einspritzzeit Benzin 44 zeigt die Einspritzzeit für Benzin über einen Umschaltpunkt 42 hinweg.

Die Einspritzzeiten ti 40 definieren die Dauer des Einspritzvorganges und somit die Menge des zugefiihrten Kraftstoffs. Auf Grund des unterschiedlichen stöchiometrischen Luft-/Kraftstoff Verhältnisses für Ethanol und Benzin für eine Verbrennung bei einem Lambda von 1 wird durch die aktive Lambdaregelung der Brennkraftmaschine 10 die Einspritzzeit Ethanol 43 höher eingeregelt als die Einspritzzeit Benzin 44. Das Verhältnis der Einspritzzeit Ethanol 43 zu der Einspritzzeit Benzin 44 und somit das Verhältnis der je Einspritzvorgang zugeführten Kraftstoffmengen beträgt bei einem Lambda von 1 in etwa 1,33.

Ab dem Umschaltzeitpunkt 42 wird die Brennkraftmaschine 10 im Schubbetrieb bei ausgeschalteter Zündung betrieben. Zur Bestimmung der Zusammensetzung des Kraftstoffgemischs 24 werden ab dem Umschaltzeitpunkt 42, entgegen dem üblichen Betrieb der Brennkraftmaschine 10, die vor dem Umschaltpunkt 42 eingeregelten Einspritzzeiten 43, 44 und somit Einspritzmengen beibehalten. Die Zuführung von Kraftstoff kann dabei für alle Zylinder der Brennkraftmaschine 10 erfolgen oder auf einen Zylinder oder eine Auswahl an Zylindern beschränkt sein. Da keine Zündung erfolgt, kann der Kraftstoff den Brennraum unverbrannt in Richtung Abgaskanal 30 und Abgassonde 31 passieren. Der in Figur 1 dargestellten Abgassonde 31 wird so eine definierte Menge unverbrannten Kraftstoffs zugeführt.

Figur 3 zeigt den zeitlichen Verlauf von Ausgangssignalen 51, 52 einer Breitband-Lambdasonde während Diagnosephasen zur Bestimmung der Zusammensetzung eines Kraftstoffgemischs 24. Dazu ist eine Ausgangsspannung 50 der Lambdasonde gegenüber der in Figur 2 eingeführten Zeitachse 4 aufgetragen. Der Umschaltzeitpunkt 42 markiert wieder den Zeitpunkt der Umschaltung vom regulären Betrieb der Brennkraftmaschine 10 unter Last in den Schubbetrieb bei ausgeschalteter Zündung. Dabei wird entsprechend den in Figur 2 dargestellten Einspitzzeiten 43, 44 die Kraftstoffzufuhr fortgeführt.

Der zeitliche Verlauf der Ausgangsspannung 50 der Breitband-Lambdasonde bei Betrieb der Brennkraftmaschine 10 mit einem Kraftstoffgemisch 24 E85 aus 85% Ethanol und 15% Benzin ist in der Kurve Ausgangssignal Lambdasonde Ethanol 51 dargestellt, während die Kurve Ausgangssignal Lambdasonde Benzin 52 den zeitlichen Verlauf der Ausgangsspannung 50 der Breitband-Lambdasonde bei Betrieb der Brennkraftmaschine 10 mit reinem Benzin beschreibt. Dabei liegen das Ausgangssignal Lambdasonde Ethanol 51 und das Ausgangssignal Lambdasonde Benzin 52 bei aktiver Lambdaregelung vor dem Umschaltzeitpunkt 45 auf einem gleichen Niveau und legen dort einen Referenzwert 53 fest. Nach dem Umschaltzeitpunkt 45 bilden sich eine Differenz Ethanol 54 zwischen dem Ausgangssignal Lambdasonde Ethanol 51 und dem Referenzwert 53 sowie eine Differenz Benzin 55 zwischen dem Ausgangssignal Lambdasonde Benzin 52 und dem Referenzwert 53 aus.

Nach dem Umschaltzeitpunkt 42 erreicht unverbrannter Kraftstoff die Breitband-Lambdasonde. Die Menge des unverbrannten Kraftstoffs, der der Breitband-Lambdasonde zugeführt wird, ist dabei durch die vor dem Umschaltzeitpunkt 42 eingeregelte Einspritzzeit festgelegt. Sobald unverbrannter Kraftstoff die Breitband-Lambdasonde erreicht, steigt sowohl bei einem Kraftstoff Benzin als auch bei einem Kraftstoffgemisch 24 E85 die Ausgangsspannung 50 der Breitband-Lambdasonde an. Dabei erreicht das Ausgangssignal Lambdasonde Benzin 52 einen höheren Wert als das Ausgangssignal Lambdasonde Ethanol 51.

Die Bestimmung der Zusammensetzung des Kraftstoffgemischs 24 erfolgt an Hand der Differenzen 54, 55 der Ausgangsspannung 50 nach dem Umschaltzeitpunkt 42 gegenüber dem vor dem Umschaltzeitpunkt 42 gebildeten Referenzwert 53. So steigt entsprechend durchgeführter Messungen bei einer bekannten Breitband-Lambdasonde LSU 4.9 das Ausgangssignal Lambdasonde Benzin 52 um 1,49V gegenüber dem zuvor bestimmten Referenzwert 53 an. Das Ausgangssignal Lambdasonde Ethanol 51 steigt hingegen nur um 0,97V gegenüber dem Referenzwert 53 an. Für Kraftstoffgemische 24 mit Mischungsverhältnissen, die zwischen dem von reinem Benzin und E85 liegen, werden entsprechend Änderungen der Ausgangsspannung 50 zwischen 1,49 V und 0,97V gemessen. Anhand der Differenzen 54, 55 der Ausgangsspannung 50 der Breitband-Lambdasonde bei Zuführung von unverbranntem Kraftstoff gegenüber dem zuvor ermittelten Referenzwert 53 kann daher auf die Zusammensetzung des Kraftstoffgemischs 24 geschlossen werden. Die Differenz 54, 55 der Ausgangsspannung 50 der Breitband-Lambdasonde gegenüber dem Referenzwert 53 ergibt sich aus der Änderung des Pumpstromes der Breitband-Lambdasonde bei Überschreiten des Umschaltzeitpunktes 42. Zur Bestimmung des Ethanol-Anteils in dem Kraftstoffgemisch 24 wird daher ursächlich die Änderung des Pumpstromes gegenüber der bekannten Referenz herangezogen.

## Patentansprüche

1. Verfahren zur Bestimmung der Zusammensetzung eines Kraftstoffgemischs (24) aus einem ersten und zumindest einem zweiten Kraftstoff zum Betrieb einer Brennkraftmaschine (10), wobei die Brennkraftmaschine (10) eine Kraftstoff-Dosiereinrichtung (22) und zumindest eine Abgassonde (31) in einem Abgaskanal (30) aufweist, **dadurch gekennzeichnet, dass** der Abgassonde (31) zumindest zeitweise das Kraftstoffgemisch (24) zumindest teilweise unverbrannt zugeführt wird und dass aus einem Ausgangssignal der Abgassonde (31) die Zusammensetzung des Kraftstoffgemischs (24) bestimmt wird.

2. Verfahren nach Anspruch 1, **dadurch gekennzeichnet, dass** der Abgassonde (31) eine vordefinierte Menge des Kraftstoffgemischs (24) zugeführt wird.

3. Verfahren nach Anspruch 1 oder 2, **dadurch gekennzeichnet, dass** das Kraftstoffgemisch (24) der Brennkraftmaschine (10) mittels der Kraftstoff-Dosiereinrichtung (22) in einem Schubbetrieb zugeführt wird.

4. Verfahren nach Anspruch 1 und 2, **dadurch gekennzeichnet, dass** die vordefinierte Menge des Kraftstoffgemischs (24) der Brennkraftmaschine (10) mittels der Kraftstoff-Dosiereinrichtung (22) so spät nach einem oberen Totpunkt zugeführt wird, dass das Kraftstoffgemisch (24) zumindest teilweise unverbrannt die Abgassonde (31) erreicht.

5. Verfahren nach Anspruch 1 und 2, **dadurch gekennzeichnet, dass** das Kraftstoffgemisch (24) der Brennkraftmaschine (10) mittels der Kraftstoff-Dosiereinrichtung (22) zumindest teilweise während eines Ausstoßtaktes bei geöffnetem Auslassventil zugeführt wird.

6. Verfahren nach einem der Ansprüche 3 bis 5, **dadurch gekennzeichnet, dass** bei Brennkraftmaschinen (10) mit mehreren Zylindern das unverbrannte Kraftstoffgemisch (24) einem Zylinder oder einer ausgewählten Anzahl an Zylindern zugeführt wird.

7. Verfahren nach einem der Ansprüche 1 bis 6, **dadurch gekennzeichnet, dass** während der Bestimmung der Zusammensetzung des Kraftstoffgemischs (24) die Temperatur der Abgassonde (31) herabgesetzt wird.

8. Verfahren nach einem der Ansprüche 1 bis 7, **dadurch gekennzeichnet, dass** die Bestimmung der Zusammensetzung des Kraftstoffgemischs (24) ausschließlich aus dem Signal der Abgassonde (31) erfolgt oder in einer Kombination mit anderen Verfahren zur Bestimmung der Zusammensetzung des Kraftstoffgemischs (24) durchgeführt wird.

9. Verfahren nach einem der Ansprüche 1 bis 8, **dadurch gekennzeichnet, dass** als Abgassonde (31) eine Breitband-Lambdasonde verwendet wird.

10. Verfahren nach Anspruch 9, **dadurch gekennzeichnet, dass** die Temperatur der Abgassonde (31) während der Bestimmung der Zusammensetzung des Kraftstoffgemischs (24) auf einen Bereich von 550°C bis 700°C oder auf einen Bereich von 400°C bis 550°C eingestellt wird.

11. Verfahren nach Anspruch 9 oder 10, **dadurch gekennzeichnet, dass** eine Änderung eines Pumpstroms der Breitband-Lambdasonde gegenüber einem Referenzwert zur Bestimmung der Zusammensetzung des Kraftstoffgemischs (24) verwendet wird.

12. Verfahren nach einem der Ansprüche 1 bis 8, **dadurch gekennzeichnet, dass** als Abgassonde (31) eine Lambdasonde mit Sprungcharakteristik verwendet wird.

13. Verfahren nach Anspruch 12, **dadurch gekennzeichnet, dass** die Temperatur der Abgassonde (31) während der Bestimmung der Zusammensetzung des Kraftstoffgemischs (24) auf einen Bereich von 500°C bis 650°C oder auf einen Bereich von 350°C bis 500°C eingestellt wird.

14. Verfahren nach Anspruch 12 oder 13, **dadurch gekennzeichnet, dass** eine Verschiebung eines Ausgangssignals der Abgassonde (31) im fetten Bereich zur Bestimmung der Zusammensetzung des Kraftstoffgemischs (24) verwendet wird.

15. Verfahren nach einem der Ansprüche 1 bis 8, **dadurch gekennzeichnet, dass** als Abgassonde (31) eine für Kohlenwasserstoffe sensitive Abgassonde (31) verwendet wird.

16. Verfahren nach Anspruch 15, **dadurch gekennzeichnet, dass** die Temperatur der für Kohlenwasserstoffe sensitiven Abgassonde (31) während der Bestimmung der Zusammensetzung des Kraftstoffgemischs (24) auf einen Bereich von 400°C bis 650°C eingestellt wird.

17. Anwendung des Verfahrens nach einem der Ansprüche 1 bis 16 zur Bestimmung der Zusammensetzung eines Benzin/Ethanol-Kraftstoffgemischs (24) und/oder eines Benzin/Methanol-Kraftstoffgemischs (24) und/oder eines Benzin/Ethanol/Methanol-Kraftstoffgemischs (24).

## Claims

1. Method for determining the composition of a fuel mixture (24) of a first and at least one second fuel for operating an internal combustion engine (10), the internal combustion engine (10) having a fuel dosing device (22) and at least one exhaust-gas probe (31) in an exhaust duct (30), **characterized in that** the fuel mixture (24) is at least intermittently supplied at least partially unburned to the exhaust-gas probe (31), and **in that** the composition of the fuel mixture (24) is determined from an output signal of the exhaust-gas probe (31).

2. Method according to Claim 1, **characterized in that** a predefined amount of the fuel mixture (24) is supplied to the exhaust-gas probe (31).

3. Method according to Claim 1 or 2, **characterized in that** the fuel mixture (24) of the internal combustion engine (10) is supplied by means of the fuel dosing device (22) in an overrun mode.

4. Method according to Claim 1 and 2, **characterized in that** the predefined amount of the fuel mixture (24) of the internal combustion engine (10) is supplied by means of the fuel dosing device (22) so late after a top dead centre that the fuel mixture (24) reaches the exhaust-gas probe (31) at least partially unburned.

5. Method according to Claim 1 and 2, **characterized in that** the fuel mixture (24) of the internal combustion engine (10) is supplied by means of the fuel dosing device (22) at least partially during an exhaust stroke with the outlet valve open.

6. Method according to one of Claims 3 to 5, **characterized in that**, in internal combustion engines (10) with a plurality of cylinders, the unburned fuel mixture (24) is supplied to one cylinder or to a selected number of cylinders.

7. Method according to one of Claims 1 to 6, **characterized in that**, during the determination of the composition of the fuel mixture (24), the temperature of the exhaust-gas probe (31) is reduced.

8. Method according to one of Claims 1 to 7, **characterized in that** the determination of the composition of the fuel mixture (24) takes place exclusively from the signal of the exhaust-gas probe (31) or is carried out in combination with other methods for determining the composition of the fuel mixture (24).

9. Method according to one of Claims 1 to 8, **characterized in that** a broadband Lambda probe is used as an exhaust-gas probe (31).

10. Method according to Claim 9, **characterized in that**, during the determination of the composition of the fuel mixture (24), the temperature of the exhaust-gas probe (31) is set to a range from 550°C to 700°C or to a range from 400°C to 550°C.

11. Method according to Claim 9 or 10, **characterized in that** a change in a pumping current of the broadband lambda probe in relation to a reference value is used to determine the composition of the fuel mixture (24).

12. Method according to one of Claims 1 to 8, **characterized in that** a lambda probe with a step characteristic is used as an exhaust-gas probe (31).

13. Method according to Claim 12, **characterized in that**, during the determination of the composition of the fuel mixture (24), the temperature of the exhaust-gas probe (31) is set to a range from 500°C to 650°C or to a range from 350°C to 500°C.

14. Method according to Claim 12 or 13, **characterized in that** a shift of an output signal of the exhaust-gas probe (31) in the rich range is used to determine the composition of the fuel mixture (24).

15. Method according to one of Claims 1 to 8, **characterized in that**, as an exhaust-gas probe (31), use is made of an exhaust-gas probe (31) which is sensitive to hydrocarbons.

16. Method according to Claim 15, **characterized in that**, during the determination of the composition of the fuel mixture (24), the temperature of the exhaust-gas probe (31) which is sensitive to hydrocarbon is set to a range prom 400°C to 650°C.

17. Use of the method according to one of Claims 1 to 16 for determining the composition of a benzine/ethanol fuel mixture (24) and/or of a benzine/methanol fuel mixture (24) and/or of a benzine/ethanol/methanol fuel mixture (24).

## Revendications

1. Procédé pour déterminer la composition d'un mélange de carburant (24) constitué d'un premier et d'au moins un deuxième carburant pour faire fonctionner un moteur à combustion interne (10), le moteur à combustion interne (10) présentant un dispositif de dosage de carburant (22) et au moins une sonde de gaz d'échappement (31) dans un canal de gaz d'échappement (30), **caractérisé en ce que** le mélange de carburant (24) est acheminé au moins temporairement et au moins en partie non brûlé à la sonde de gaz d'échappement (31) et **en ce que** la composition du mélange de carburant (24) est déterminée à partir d'un signal de sortie de la sonde de gaz d'échappement (31).

2. Procédé selon la revendication 1, **caractérisé en ce qu'**une quantité prédéfinie du mélange de carburant (24) est acheminée à la sonde de, gaz d'échappement (31).

3. Procédé selon la revendication 1 ou 2, **caractérisé en ce que** le mélange de carburant (24) est acheminé au moteur à combustion interne (10) au moyen du dispositif de dosage de carburant (22) dans un mode de fonctionnement en poussée.

4. Procédé selon les revendications 1 et 2, **caractérisé en ce que** la quantité prédéfinie du mélange de carburant (24) du moteur à combustion interne (10) est acheminée au moyen du dispositif de dosage de carburant (22) suffisamment tard après un point mort haut que le mélange de carburant (24) atteigne la sonde de gaz d'échappement (31) au moins en partie non brûlé.

5. Procédé selon les revendications 1 et 2, **caractérisé en ce que** le mélange de carburant (24) est acheminé au moteur à combustion interne (10) au moyen du dispositif de dosage de carburant (22) au moins en partie pendant un temps d'éjection lorsque la soupape d'échappement est ouverte.

6. Procédé selon l'une quelconque des revendications 3 à 5, **caractérisé en ce que** dans le cas de moteurs à combustion interne (10) avec plusieurs cylindres, le mélange de carburant non brûlé (24) est acheminé à un cylindre ou à un nombre sélectionné de cylindres.

7. Procédé selon l'une quelconque des revendications 1 à 6, **caractérisé en ce que** pendant la détermination de la composition du mélange de carburant (24), la température de la sonde de gaz d'échappement (31) est abaissée.

8. Procédé selon l'une quelconque des revendications 1 à 7, **caractérisé en ce que** la détermination de la composition du mélange de carburant (24) a lieu exclusivement à partir du signal de la sonde de gaz d'échappement (31) ou en combinaison avec d'autres procédés pour déterminer la composition. du mélange de carburant (24).

9. Procédé selon l'une quelconque des revendications 1 à 8, **caractérisé en ce que** l'on utilise comme sonde de gaz d'échappement (31) une sonde lambda à large bande.

10. Procédé selon la revendication 9, **caractérisé en ce que** la température de la sonde de gaz d'échappement (31) pendant la détermination de la composition du mélange de carburant (24) est ajustée à une plage de 550°C à 700°C ou à une plage de 400°C à 550°C.

11. Procédé selon la revendication 9 ou 10, **caractérisé en ce qu'**une variation d'un courant de pompe de la sonde lambda à large bande par rapport à une valeur de référence est utilisée pour déterminer la composition du mélange de carburant (24).

12. Procédé selon l'une quelconque des revendications 1 à 8, **caractérisé en ce que** l'on utilise comme sonde de gaz d'échappement (31) une sonde lambda avec une caractéristique de saut.

13. Procédé selon la revendication 12, **caractérisé en ce que** la température de la sonde de gaz d'échappement (31) pendant la détermination de la composition du mélange de carburant (24) est ajustée à une plage de 500°C à 650°C ou à une plage de 350°C à 500°C.

14. Procédé selon la revendication 12 ou 13, **caractérisé en ce qu'**un déplacement d'un signal de sortie de la sonde de gaz d'échappement (31) dans la plage riche est utilisé pour déterminer la composition du mélange de carburant (24).

15. Procédé selon l'une quelconque des revendications 1 à 8, **caractérisé en ce que** l'on utilise comme sonde de gaz d'échappement (31) une sonde de gaz d'échappement (31) sensible aux hydrocarbures.

16. Procédé selon la revendication 15, **caractérisé en ce que** la température de la sonde de gaz d'échappement (31) sensible aux hydrocarbures est ajustée pendant la détermination de la composition du mélange de carburant (24) à une plage de 400°C à 650°C.

17. Utilisation du procédé selon l'une quelconque des revendications 1 à 16 pour déterminer la composition d'un mélange de carburant essence/éthanol (24) et/ou d'un mélange de carburant (24) essence/méthanol et/ou d'un mélange de carburant essence/éthanol/méthanol (24).
